# FASCICULE DE BREVET EUROPEEN

(11) **EP 3 655 679 B1**
(45) Date de publication et mention de la délivrance du brevet: **29.03.2023**
(21) Numéro de dépôt: 18758923.9
(22) Date de dépôt: 20.07.2018
(51) Int. Cl.: F16H 57/04

(54) **GICLEUR DE LUBRIFIANT POUR UN REDUCTEUR DE VITESSE A TRAIN EPICYCLOÏDAL DE TURBOMACHINE**
SCHMIERDÜSE FÜR EINEN PLANETENGETRIEBE-DREHZAHLMINDERER EINER TURBOMASCHINE
LUBRICANT NOZZLE FOR A PLANETARY GEAR SET SPEED REDUCER OF A TURBOMACHINE

(30) Priorité: 20.07.2017 FR 1756894; 07.12.2017 FR 1761760
(43) Date de publication de la demande: 27.05.2020
(73) Titulaire: Safran Transmission Systems, 92700 Colombes (FR)
(72) Inventeur: DI GIOVANNI, Jean-Charles, Michel, Pierre, 77550 Moissy-Cramayel (FR); DOMBEK, Alexis, Claude, Michel, 77550 Moissy-Cramayel (FR); MORELLI, Boris, Pierre, Marcel, 77550 Moissy-Cramayel (FR)
(74) Mandataire: Gevers & Orès
(86) Numéro de dépôt international: PCT/FR2018/051870
(87) Numéro de publication internationale: WO 2019/016491

(56) Documents cités:
- CN-A- 106 594 248
- DE-A1-102008 004 999
- US-A1- 2012 222 761

## Description

### Domaine de l'invention

La présente invention concerne le domaine des réducteurs de vitesse à train épicycloïdal pour turbomachine en particulier d'aéronef, l'invention concerne un gicleur de lubrifiant pour un tel réducteur. L'invention concerne en outre un ensemble comprenant tels gicleurs et un turbomachine d'aéronef comprenant au moins un de tel gicleur.

### Etat de la technique

L'état de l'art comprend notamment les documents WO-A1-2010/092263, FR-A1 -2 987 416, CN-A-106 594 248 (qui montre la préambule de la revendication 1), DE-A1-10 2008 004999 et FR-A1-3 041 054.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement de leurs pignons et paliers.

Parmi les réducteurs utilisés, on trouve les réducteurs planétaire et (à train) épicycloïdal qui ont l'avantage d'offrir des taux de réduction importants de la vitesse de rotation dans des encombrements réduits.

Un tel réducteur comprend un pignon planétaire ou pignon central, appelé solaire, une couronne extérieure et des pignons satellites, appelés satellites, qui sont en prise avec le solaire et avec la couronne, le support de l'un de ces trois composants devant être bloqué en rotation pour le fonctionnement du train d'engrenages.

Lorsque le porte-satellites est fixe en rotation, le solaire et la couronne sont menant et mené, respectivement, ou inversement. Le réducteur est alors du type « planétaire ».

Dans le cas inverse, le plus fréquent, d'un réducteur à train épicycloïdal, la couronne extérieure est fixe en rotation et le solaire et le porte-satellites sont menants et menés.

Cependant, ce type de réducteur présente des inconvénients. Une des problématiques est lié à la bonne lubrification des dentures des satellites et du solaire. L'huile doit passer d'une partie fixe du moteur à une partie tournante à haute vitesse. Une fois dans la partie tournante, l'huile n'est plus sous pression. A haute vitesse, il est difficile d'atteindre le solaire avec l'huile à cause de l'effet de centrifugation. Il est alors primordial de rapprocher le gicleur au plus près du solaire. Une autre des problématiques est liée à la complexité du montage.

La présente invention propose un perfectionnement qui apporte une solution simple, efficace et économique à au moins une partie de ces problèmes.

### Exposé de l'invention

L'invention concerne un gicleur de lubrifiant pour un réducteur de vitesse à train épicycloïdal de turbomachine, ledit gicleur ayant une forme générale allongée et comportant un corps d'axe longitudinal B, ledit corps comportant une cavité interne longitudinale qui est en communication fluidique avec une entrée de lubrifiant située à une extrémité longitudinale dudit corps et avec des orifices de sortie de lubrifiant qui sont formés dans une paroi annulaire dudit corps et qui s'étendent sensiblement radialement par rapport audit axe B, lesdits orifices sont formés dans au moins un bossage dudit corps, qui est en saillie radialement vers l'extérieur sur ladite paroi caractérisé en ce que le bossage a une étendue angulaire autour dudit axe inférieure à 180°.

Par opposition à la technique antérieure, un gicleur a ainsi davantage de matière au niveau des orifices de projection d'huile. Cet ajout de matière a la forme d'un bossage au sommet duquel débouchent les orifices. Les orifices ont ainsi une dimension radiale supérieure à celle des orifices d'un gicleur selon la technique antérieure, et ont leurs extrémités radialement externes qui sont à un rayon supérieur et peuvent être rapprochées des dentures à lubrifier. L'huile traversant les orifices est guidée sur une plus longue distance et est projetée au plus près des dentures, ce qui optimise de manière significative la lubrification du réducteur.

Dans la présente demande, on entend par des orifices sensiblement radiaux des orifices qui ont une orientation sensiblement radiale, c'est-à-dire que chacun de leurs axes est sensiblement confondu avec un rayon, en particulier à l'axe du corps.

Le gicleur selon l'invention peut comprendre une ou plusieurs des caractéristiques suivantes, prises isolément les unes des autres, ou en combinaison les unes avec les autres :
- le au moins un bossage a en section transversale une forme générale rectangulaire, triangulaire ou en trapézoïdale ; la forme du bossage est ainsi optimisée pour acheminer l'huile au plus près des dentures à lubrifier ;
- le bossage en trapèze comprend une petite base qui est définie par l'extrémité radialement externe du bossage sur laquelle débouchent lesdits orifices, et des flancs qui forment entre eux un angle compris entre 0 et 90° ; l'encombrement des bossages est ainsi réduit ;
- la petite base a une forme incurvée convexe, qui peut être obtenue par tournage par exemple ;
- ledit au moins un bossage comprend au moins une rangée d'orifices par élément à lubrifier ; il comporte par exemple deux rangées comportant chacune plusieurs orifices ; en variante, les orifices pourraient avoir une autre disposition ;
- ledit corps comprend au moins deux bossages à distance longitudinale l'un de l'autre ; les bossages sont situés dans des zones privilégiées du corps du gicleur afin d'optimiser la lubrification des dentures tout en optimisant l'encombrement et la masse du gicleur ; dans notre cas, la zone privilégiée est définie par le nombre et la largeur des hélices des dentures ;
une extension de matière peut être ajoutée sur ces bossages ; cela nous permet après fabrication de retirer de la matière pour obtenir une masse presque identique sur chaque gicleur afin de limiter le balourd du réducteur ;
- le gicleur comprend une patte de fixation formée d'une seule pièce avec le corps, ladite patte s'étendant sensiblement dans un plan perpendiculaire audit axe et comportant un orifice de passage d'un moyen de fixation du type vis-écrou ou vis-trou taraudé; le corps du gicleur a ainsi une forme relativement simple, ce qui limite son coût de fabrication ;
- ledit corps comprend au moins une gorge annulaire externe de logement d'un joint annulaire d'étanchéité.

Selon un autre aspect, l'invention concerne un ensemble comportant un porte-satellites et des gicleurs tels que définis ci-dessus, pour un réducteur de vitesse à train épicycloïdal de turbomachine, ledit porte-satellites comprenant une cage définissant un espace interne de montage d'un solaire central d'axe X de rotation et d'une rangée annulaire de satellites disposés autour de l'axe X et engrenés avec ledit solaire, ledit solaire comportant des moyens d'accouplement à un premier arbre, ladite cage comportant deux parois annulaires sensiblement parallèles centrées sur ledit axe X et une paroi cylindrique reliant lesdites parois annulaires à leur périphérie externe, une première desdites parois annulaires étant reliée à un corps sensiblement cylindrique comportant des moyens d'accouplement à un second arbre, et une seconde desdites parois annulaires comportant des passages pour le montage des gicleurs, par déplacement de chaque gicleur dans une direction sensiblement parallèle audit axe X, caractérisé en ce que lesdits gicleurs sont configurés pour être montés sur ladite seconde paroi depuis l'intérieur de la cage.

Avantageusement, les gicleurs comprennent chacun une première portion longitudinale comportant lesdits bossages et ladite platine et une seconde portion filetée, la première portion de chaque gicleur étant configurée pour s'étendre à l'intérieur de ladite cage et la portion filetée étant destinée à recevoir un écrou destiné à prendre appui sur une face externe de ladite cage.

La portion filetée de chaque gicleur peut traverser d'une part un logement d'un rouet rapporté et fixé sur ladite seconde paroi de la cage, et d'autre part un logement de cette seconde paroi.

Selon un autre aspect, l'invention concerne une turbomachine d'aéronef, caractérisée en ce qu'elle comprend au moins un gicleur ou un ensemble tel que décrit ci-dessus.

Selon un autre aspect, l'invention concerne un porte-satellites et un procédé d'assemblage d'un porte-satellites tel que décrit ci-dessus, dans lequel il comprend les étapes de :
- fixation des gicleurs à la cage,
- montage des satellites et du solaire dans la cage, et
- fixation du rouet sur la cage.

D'autres variantes du procédé de montage sont naturellement possible.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue en coupe axiale d'un réducteur à train épicycloïdal,
- la figure 3 est une vue schématique en perspective d'un mode de réalisation d'un réducteur à train épicycloïdal,
- la figure 4 est une vue schématique en perspective du réducteur de la figure 3, son rouet étant dissocié du reste du réducteur,
- la figure 5 est une vue schématique en perspective d'un ensemble comportant un rouet, des gicleurs et une cage du réducteur de la figure 3, cette cage étant partiellement représentée,
- la figure 6 est une autre vue en perspective du rouet du réducteur de la figure 3,
- la figure 7 est une vue schématique partielle en coupe axiale et à plus grande échelle d'un détail du réducteur de la figure 3, et en particulier d'un gicleur du réducteur, et
- la figure 8 est une vue schématique partielle en coupe transversale et à plus grande échelle d'un détail du réducteur de la figure 3, et en particulier d'un gicleur du réducteur.

### Description détaillée d'un mode de réalisation de l'invention

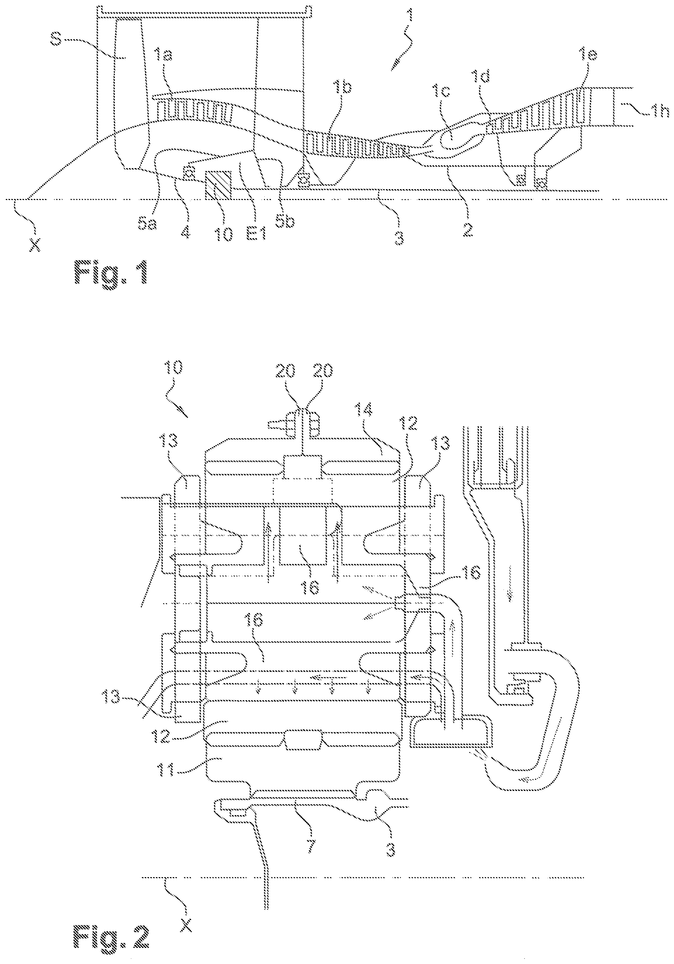

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former un enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

En référence à la figure 2, le réducteur 10 comprend une couronne 14 qui est fixée par l'intermédiaire d'un porte-couronne (non représenté) à la structure fixe 5a, 5b avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie maintenue par des roulements ou des paliers et sur lequel vient se monter la soufflante. Ces moyens de fixation sont connus de l'homme du métier et ne sont pas détaillés ici. Une brève description peut en être trouvée par exemple dans FR-A1-2987416.

Le réducteur 10 embraye d'une part sur l'arbre BP3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et sept. Les satellites 12 tournent aussi autour de l'axe X de la turbomachine sauf dans le cas d'un planétaire où ils tournent uniquement autour de leurs axes de révolution, en engrenant sur des dentures internes de la couronne 14, qui est fixée à un stator de la turbomachine par l'intermédiaire de brides 20 dans le cas d'un épicycloïdal ou fixé à un rotor de la turbomachine dans le cas d'un planétaire. Chacun des satellites 12 tourne librement autour d'un axe/palier de satellite 16 relié au porte-satellite 13, à l'aide d'un palier qui peut être lisse, comme représenté sur la figure 2, ou un palier à éléments roulants (roulements à billes ou à rouleaux).

La rotation des satellites 12 autour de leur axe de satellite 16, du fait de la coopération de leurs pignons avec les dentures de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

La figure 2 montre l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon lié à la structure fixe de la turbomachine, jusqu'aux pignons et aux paliers à lubrifier. Le dispositif de lubrification comporte classiquement trois parties : une première partie liée à la structure fixe et délivrant l'huile vers les parties tournantes du réducteur 10, un rouet tournant avec le porte-satellites 13 réceptionnant cette huile dans le cas d'un épicycloïdal et d'un distributeur assemblé au porte-satellite, qui sont fixes sur une architecture planétaire, et des circuits de distribution d'huile alimentés en huile par le rouet pour l'acheminer vers les endroits à lubrifier.

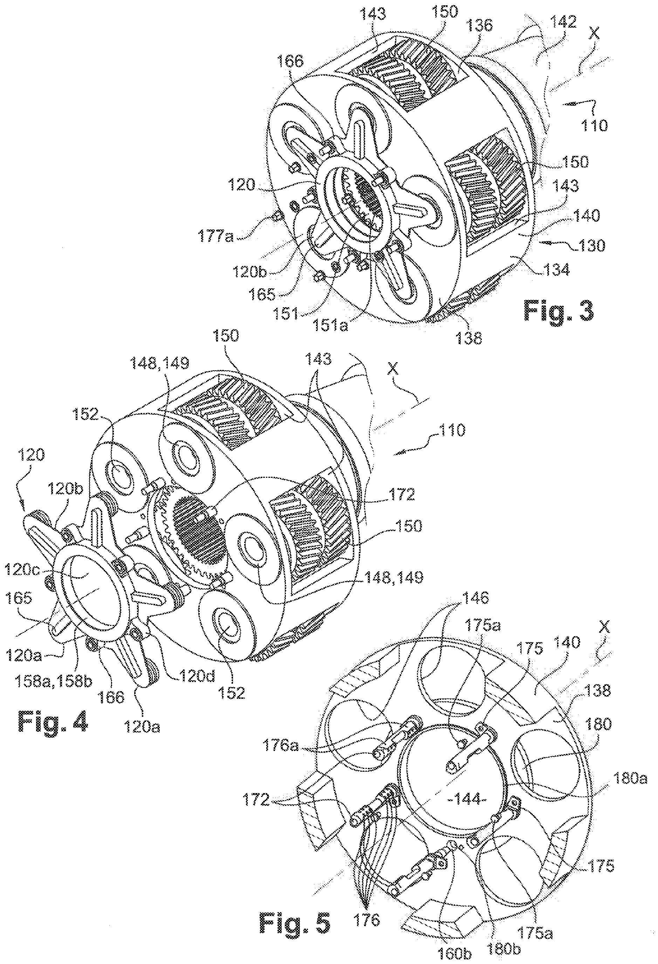

Les figures 3 à 8 illustrent un exemple de réalisation d'un réducteur 110 selon l'invention.

La référence 130 désigne le porte-satellites du réducteur 110, qui est ici du type monobloc comprenant une partie formant une cage 134 et une partie formant un fût 142. La cage comporte deux parois annulaires 136, 138 coaxiales et reliées à leur périphérie par une paroi cylindrique 140.

La paroi annulaire 136 est solidaire du fût 142 sensiblement cylindrique, partiellement visible, ce fût comportant des moyens d'engrènement avec l'arbre de soufflante 4 de la turbomachine. Les moyens d'accouplement sont par exemple des cannelures longitudinales.

Dans l'exemple représenté, la paroi cylindrique 140 est ajourée et comprend des lumières 143 traversantes en direction radiale permettant le montage des satellites 150.

La paroi 138 comprend une ouverture centrale 144 (permettant le montage du solaire) centrée sur l'axe X et une série d'orifices 146 régulièrement répartis autour de l'axe X, l'ouverture 144 et les orifices 146 étant traversants en direction axiale (figure 5).

Les orifices 146 servent au montage des axes 148 de rotation des satellites 150. Les axes 148 sont parallèles à l'axe X et sont montés dans la cage 134 par translation axiale en passant par les orifices 146. Ils sont fixés à leurs extrémités longitudinales sur les parois 136, 138, respectivement. Chaque axe 148 est solidaire d'un palier lisse 149 autour duquel est monté le satellite 150 (figure 4). L'axe 148 est creux et comprend une cavité cylindrique interne 152. L'axe 148 et le palier 149 sont traversés par au moins un conduit radial (non visible) qui débouche à son extrémité radialement interne dans la cavité 152, et à son extrémité radialement externe dans une rainure longitudinale de la périphérie du palier en vue de son alimentation en huile.

Comme cela est visible à la figure 4, les satellites 150 montés à rotation sur les axes 148 ont leurs périphéries externes qui traversent en partie les lumières 143 en vue de leur engrènement avec la couronne externe du réducteur 110 destinée à entourer la cage 134.

Les satellites 150 engrènent avec le solaire 151 qui comprend des cannelures rectilignes internes 151a d'accouplement à un autre arbre tel qu'un arbre de turbine.

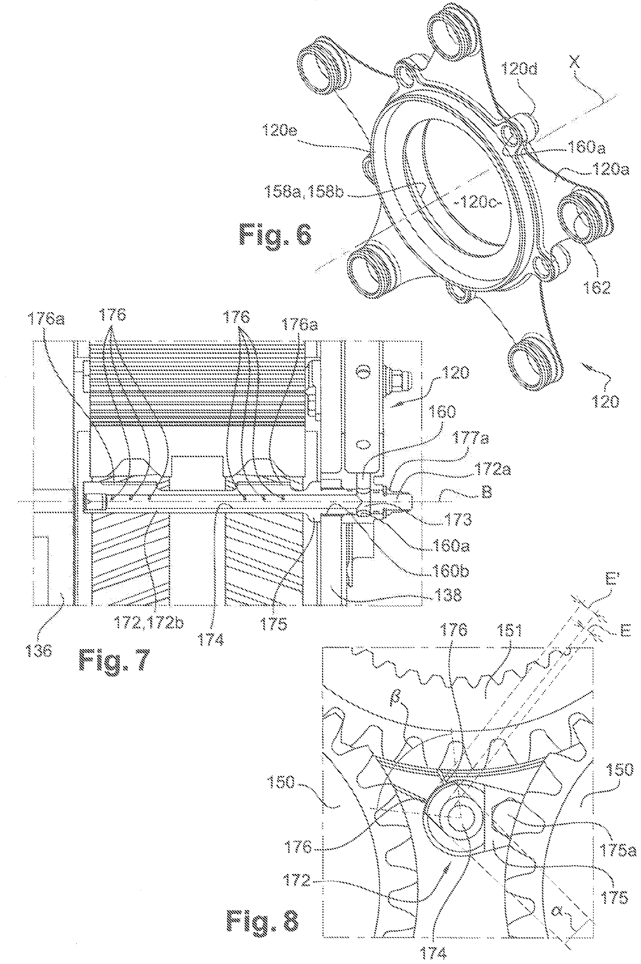

Un rouet 120 est rapporté et fixé sur la paroi 138, du côté de sa face externe, c'est-à-dire celle qui n'est pas située du côté des satellites 150. Le rouet 120 a pour fonction de lubrifier le réducteur 110 et comprend des moyens de lubrification configurés pour amener du lubrifiant jusqu'à des gicleurs 172 et jusqu'aux axes 148 et paliers 149. L'alimentation en huile des gicleurs 172 permet de lubrifier les dents d'engrènement des satellites 150 et du solaire 151, comme cela sera décrit plus en détail dans ce qui suit en référence à la figure 8.

Le rouet 120 a une forme générale annulaire et comprend des bras 120a en saillie radiale vers l'extérieur, au nombre de cinq dans l'exemple représenté.

Le rouet 120 est destiné à être monté coaxialement sur la paroi 138 et comporte une face 120b d'appui et de fixation sur cette paroi.

Le rouet 120 comporte une ouverture centrale 120cdélimitée extérieurement par une partie annulaire définissant une ou plusieurs gorges annulaires 158a, 158b coaxiales et disposées axialement l'une à côté de l'autre. Ces gorges 158a, 158b s'étendent autour de l'axe X et débouchent radialement vers l'intérieur. Leur paroi de fond radialement externe comprend des orifices en communication fluidique avec des canaux radiaux 160, d'une part, et des conduits radiaux 162, d'autre part (figure 6).

Bien que cela ne soit pas représenté, de l'huile est destinée à être projetée dans les gorges 158a, 158b par des moyens d'alimentation en lubrifiant. Ces moyens comprennent en général une série d'injecteurs qui sont disposés autour de l'axe X et traversent les ouvertures 120c, 144. Les injecteurs sont portés par un stator et pulvérisent du lubrifiant radialement vers l'extérieur directement dans les gorges 158a, 158b, qui va ensuite s'écouler dans les canaux 160 et conduits 162.

Dans l'exemple représenté, le nombre de canaux 160 est égal au nombre de conduits 162 qui est égal au nombre d'axes 148 et de satellites 150. Ce nombre est ici de cinq. Les canaux 160 sont régulièrement répartis autour de l'axe X et les conduits 162 sont régulièrement répartis autour de l'axe X, chaque conduit 162 étant disposé entre deux canaux 160 adjacents. Les conduits et canaux sont formés dans des surépaisseurs 165, 166 du rouet (figure 3). Les surépaisseurs 165, 166 dans lesquelles sont formés les canaux 160 et les conduits 162 s'étendent radialement vers l'extérieur depuis la partie dans laquelle sont formées les gorges 158a, 158b. Les surépaisseurs 165 dans lesquelles sont formés les conduits 162 s'étendent sur les bras 120a du rouet. On peut considérer que les surépaisseurs 166 dans lesquelles sont formés les canaux 150 s'étendent sur des doigts 120d en saillie radiale vers l'extérieur du rouet. Les doigts 120d ont une étendue radiale inférieure à celle des bras 120a et sont chacun disposés entre deux bras adjacents.

Chacun des conduits 162 communique à son extrémité radialement externe avec une cavité 152 d'un axe 148 en vue de l'alimentation en lubrifiant de cet axe 148 et du palier 149 associé (figure 6). Le lubrifiant amené par les conduits 162 est destiné à être injecté dans les cavités 152, puis à s'écouler à travers les conduits précités jusqu'à la périphérie des paliers 149.

Chacun des canaux 160 communique à son extrémité radialement externe avec une extrémité longitudinale d'un gicleur 172 visible notamment aux figures 5 et 7. Les gicleurs 172 ont une forme allongée et s'étendent parallèlement à l'axe X. Leurs axes d'allongement sont notés B. Ils sont au nombre de cinq et régulièrement répartis autour de l'axe X en étant chacun disposés entre deux axes 148 adjacents. Chaque canal 160 communique avec des logements cylindriques 160a, 160b traversants de la paroi 138 et du rouet, dans lesquels est engagée une portion d'extrémité longitudinale 172a du gicleur (figure 7). La portion 172a comprend deux gorges annulaires externes dans lesquelles sont montées des joints toriques d'étanchéité qui coopèrent avec la paroi du logement 160a du rouet, et qui sont disposés de part et d'autre d'un canal transversal 173 de la portion 172a destiné à être aligné avec le canal 160 et donc en communication fluidique avec ce dernier. La portion 172a comporte un filetage externe à son extrémité libre et est reliée à une portion d'extrémité 172b opposée par une patte de fixation 175. L'extrémité libre de cette autre portion 172b est fermée.

La patte 175 est formée d'une seule pièce avec le corps sensiblement tubulaire du gicleur, et elle s'étend dans un plan sensiblement perpendiculaire à l'axe longitudinal B de ce corps.

Comme on le voit aux figures 5 et 8, la patte 175 est destinée à être appliquée contre la face interne de la paroi 138. La patte 175 comprend un orifice de passage d'une vis de fixation 175a, qui est vissée dans un trou taraudé de la paroi 138.

Chaque gicleur 172 comprend une cavité interne longitudinale 174 reliée à l'entrée de lubrifiant formée par le canal 160a et en outre des orifices 176 sensiblement radiaux, répartis sur sa longueur, qui débouchent dans la cavité 174. Le lubrifiant amené par les canaux 160 jusqu'aux gicleurs 172 est destiné à être pulvérisé par les orifices 176 sur les dentures des satellites 150 et du solaire 151 en fonctionnement (cf. figure 8).

Comme on le voit mieux aux figures 5 et 7, les orifices 176 sont formés dans au moins un bossage 176a du corps du gicleur, ce bossage 176a étant en saillie radialement vers l'extérieur.

Dans l'exemple représenté, chaque gicleur 172 comprend deux bossages 176a espacés axialement l'un de l'autre vis-à-vis de l'axe longitudinal B du gicleur. Chaque bossage 176a comprend six orifices 176 répartis en deux rangées de trois orifices régulièrement espacés. Le nombre d'orifices et de rangées peut naturellement varier. Dans l'exemple représenté, il y a un bossage par hélice de dent. Une rangée est dédiée pour le solaire et une rangée est dédiée pour un satellite. Par ailleurs, dans l'exemple représenté, trois jets sont assignés par fonction mais ce nombre peut varier selon le débit nécessaire ou le besoin de répartition de la lubrification.

Chaque bossage 176a a une étendue angulaire β autour de l'axe d'allongement B du gicleur, qui est inférieure ou égale à 360°, et de préférence à 180° (figure 8). Il a ici en section transversale une forme générale rectangulaire, triangulaire ou en trapézoïdale. Les flancs du bossage 176a sont ici sensiblement parallèles. Enfin, comme on le voit à la figure 8, la paroi tubulaire a une épaisseur de paroi E et chaque bossage forme une surépaisseur sur cette paroi, qui est égale à E' avec E' supérieure ou égale à E dans l'exemple représenté. E' est présent pour rapprocher la sortie de jet du solaire et permet aussi d'augmenter la longueur de guidage.

Les orifices 176 sont orientés de façon à ce que l'huile soit orientée vers les dentures à lubrifier. Dans l'exemple représenté, les orifices de chaque rangée de chaque bossage projettent de l'huile sur une denture, ces orifices s'étendant dans un plan non parallèle à celui dans lequel s'étendent les orifices de l'autre rangée. Dans l'exemple représenté, chaque gicleur 172 est configuré pour projeter de l'huile sur le solaire 151 et un des satellites 150.

Un outillage 180 dédié est positionné sur la paroi 138 (figure 5). Un élément de centrage 180a de l'outillage 180 permet de le centrer sur la paroi 138.

La portion d'extrémité longitudinale 172a de chaque gicleur 172 est engagée dans le logement 160b de la paroi 138 et dans le logement 180b de l'outillage 180. Une fois les gicleurs 172 positionnés à travers la cage et l'outillage, chaque patte de fixation 175 des gicleurs 172 est mise en appui sur la paroi 138 et fixée par la vis 175a. L'outillage 180 peut alors être retiré.

On procède ensuite au montage du solaire, des satellites et du rouet 120. Le rouet 120 comporte un élément de centrage 120e qui permet d'assurer le centrage du rouet 120 sur la paroi 180. Grâce aux éléments de centrage 120e du rouet et 180b de l'outillage, les gicleurs 172 ont été positionnés par rapport à la cage 140 et au rouet 120 avec une précision de localisation suffisante pour assurer l'insertion des extrémités longitudinales des gicleurs 172 dans les logements 160a du rouet 120 malgré l'hyperstatisme du montage.

Un écrou 177a est ensuite vissé sur chaque extrémité libre 172a des gicleurs 172, de façon à maintenir en position le rouet 120 sur la cage 140.

Dans la position montée des gicleurs 172 sur le porte-satellites 130 représentée à la figure 5, les bossages 176a des gicleurs sont orientés plutôt radialement vers l'intérieur.

Afin de rapprocher les orifices 176 de projection d'huile portés par les gicleurs 172 au plus près des dentures du solaire et des satellites, l'invention propose ainsi des bossages 176a de rallongement des passages d'huile dans les gicleurs jusqu'à ces orifices et donc de raccourcissement des jets d'huile. Par ailleurs, les gicleurs 172 sont ici montés par l'intérieur de la cage 134 contrairement à la technique antérieure. Le rouet 120 peut être monté préalablement à l'assemblage de la cage ou tout à la fin du processus de montage. Les gicleurs 172 sont insérés dans les logements 160b de la paroi 138 de la cage puis peuvent être positionnés les uns par rapport aux autres à l'aide de l'outillage 180 qui remplace temporairement le rouet. Chaque gicleur 172 est ensuite bridé à l'aide de la vis 175a à l'intérieur de la cage puis l'outillage de positionnement est retiré. Après cette étape, le solaire 151, les satellites 150 et leurs axes 148 peuvent être montés. Enfin, le rouet 120 est fixé sur le porte-satellite 130 à l'aide des écrous vissés sur les parties filetées des gicleurs. Cette séquence de montage est celle préférée même s'il en existe d'autres.

Dans le cadre de la présente invention, les inventeurs ont cherché à identifier tous les paramètres géométriques qui représentent la distance entre un gicleur et le solaire. En partant du diamètre de tête du solaire, et en y ajoutant un jeu de montage, on obtient un diamètre de centrage du rouet dans le porte-satellite. Ensuite, un léger jeu est laissé pour le montage du gicleur. Celui-ci dépend du diamètre de la canalisation et de l'épaisseur du joint torique. De la matière est ensuite ajoutée sur les gicleurs, par le biais des bossages, de façon à augmenter la longueur de guidage du jet de lubrifiant.

## Revendications

1. Gicleur (172) de lubrifiant pour un réducteur de vitesse à train épicycloïdal de turbomachine, ledit gicleur ayant une forme générale allongée et comportant un corps d'axe longitudinal B, ledit corps comportant une cavité interne longitudinale (174) qui est en communication fluidique avec une entrée de lubrifiant située à une extrémité longitudinale (172a) dudit corps et avec des orifices (176) de sortie de lubrifiant qui sont formés dans une paroi annulaire dudit corps et qui s'étendent sensiblement radialement par rapport audit axe longitudinal lesdits orifices sont formés dans au moins un bossage (176a) dudit corps, qui est en saillie radialement vers l'extérieur sur ladite paroi **caractérisé en ce que** le bossage (176a) a une étendue angulaire (β-Fig.8) autour dudit axe longitudinal B inférieure à 180°.

2. Gicleur (172) selon la revendication précédente, dans lequel le au moins un bossage (176a) a en section transversale une forme générale rectangulaire, triangulaire ou en trapézoïdale.

3. Gicleur (172) selon la revendication précédente, dans lequel le bossage (176a) en trapèze comprend une petite base qui est définie par l'extrémité radialement externe du bossage (176a) sur laquelle débouchent lesdits orifices (176), et des flancs qui forment entre eux un angle (α) compris entre 0 et 90°.

4. Gicleur (172) selon l'une des revendications précédentes, dans lequel ledit corps comprend au moins deux bossages (176a) à distance longitudinale l'un de l'autre.

5. Gicleur (172) selon l'une des revendications précédentes, dans lequel ledit corps comprend au moins une gorge annulaire externe de logement d'un joint annulaire d'étanchéité.

6. Gicleur (172) selon l'une des revendications précédentes, comprenant une patte de fixation (175) formée d'une seule pièce avec le corps, ladite patte s'étendant sensiblement dans un plan perpendiculaire audit axe et comportant un orifice de passage d'un moyen de fixation du type vis-écrou ou vis-trou taraudé.

7. Ensemble comportant un porte-satellites (130) et des gicleurs (172) selon l'une des revendications précédentes, pour un réducteur de vitesse à train épicycloïdal de turbomachine, ledit porte-satellites comprenant une cage (134) définissant un espace interne de montage d'un solaire central (151) d'axe X de rotation et d'une rangée annulaire de satellites (150) disposés autour de l'axe X et engrenés avec ledit solaire, ledit solaire comportant des moyens d'accouplement à un premier arbre, ladite cage comportant deux parois annulaires (136, 138) sensiblement parallèles centrées sur ledit axe X et une paroi cylindrique (140) reliant lesdites parois annulaires à leur périphérie externe, une première (136) desdites parois annulaires étant reliée à un corps (142) sensiblement cylindrique comportant des moyens d'accouplement à un second arbre, et une seconde (138) desdites parois annulaires comportant des passages pour le montage des gicleurs, par déplacement de chaque gicleur (172) dans une direction sensiblement parallèle audit axe X, **caractérisé en ce que** lesdits gicleurs (172) sont configurés pour être montés préalablement sur ladite seconde paroi depuis l'intérieur de la cage.

8. Ensemble selon la revendication précédente, les gicleurs (172) étant tels que définis à la revendication 6, dans lequel lesdits gicleurs comprennent chacun une première portion longitudinale comportant lesdits bossages (176a) et ladite patte (175) et une seconde portion filetée, la première portion de chaque gicleur étant configurée pour s'étendre à l'intérieur de ladite cage (134) et la portion filetée étant destinée à recevoir un écrou (177a) destiné à prendre appui sur une face externe de ladite cage.

9. Ensemble selon la revendication 8, dans lequel la portion filetée de chaque gicleur (172) traverse d'une part un logement (160a) d'un rouet (120) rapporté et fixé sur ladite seconde paroi (138) de la cage, et d'autre part un logement (160b) de cette seconde paroi.

10. Turbomachine d'aéronef, **caractérisée en ce qu'**elle comprend un réducteur de vitesse à train épicycloïdal comportant au moins un gicleur (172) selon l'une des revendications 1 à 6 ou un ensemble selon l'une des revendication 7 à 9.

## Patentansprüche

1. Schmiermitteldüse (172) für ein Untersetzungsgetriebe mit Planetengetriebe einer Turbomaschine, wobei die Düse eine allgemeine längliche Form hat und einen Körper mit einer Längsachse B aufweist, wobei der Körper einen inneren Längshohlraum (174) aufweist, der in strömungstechnischer Kommunikation mit einem an einem länglichen Ende (172a) des Körpers befindlichen Schmiermitteleinlass und mit Schmiermittelauslassöffnungen (176) steht, die in einer ringförmigen Wand des Körpers ausgebildet sind und sich im Wesentlichen radial in Bezug auf die Längsachse B erstrecken, die Öffnungen in mindestens einem Vorsprung (176a) des Körpers ausgebildet sind, der an der Wand radial nach außen vorsteht, **dadurch gekennzeichnet, dass** der Vorsprung (176a) eine Winkelausdehnung (β-Fig. 8) um die Längsachse B kleiner als 180° ist.

2. Düse (172) nach dem vorstehenden Anspruch, wobei der mindestens eine Vorsprung (176a) im Querschnitt eine allgemeine rechteckige, dreieckige oder trapezförmige Form aufweist.

3. Düse (172) nach dem vorstehenden Anspruch, wobei der trapezförmige Vorsprung (176a) eine kleine Basis umfasst, die durch das radial äußere Ende des Vorsprungs (176a) definiert wird, an dem die Öffnungen (176) münden, und Flanken, die zwischen sich einen Winkel (a) zwischen 0 und 90° bilden.

4. Düse (172) nach einem der vorstehenden Ansprüche, wobei der Körper mindestens zwei Vorsprünge (176a) in einem länglichen Abstand voneinander umfasst.

5. Düse (172) nach einem der vorstehenden Ansprüche, wobei der Körper mindestens eine äußere ringförmige Nut zur Aufnahme einer ringförmigen Dichtung umfasst.

6. Düse (172) nach einem der vorstehenden Ansprüche, umfassend eine Befestigungslasche (175), die einstückig mit dem Körper ausgebildet ist, wobei sich die Lasche im Wesentlichen in einer Ebene senkrecht zur Achse erstreckt und eine Öffnung für den Durchgang eines Fixierungsmittels vom Typ Schraube-Mutter oder Schraube-Gewindebohrung aufweist.

7. Einheit, die einen Planetenträger (130) und Düsen (172) nach einem der vorstehenden Ansprüche umfasst, für ein Untersetzungsgetriebe mit Planetengetriebe einer Turbomaschine, wobei der Planetenträger einen Käfig (134) aufweist, der einen Innenraum zur Montage eines zentralen Sonnenrads (151) mit einer Drehachse X und einer ringförmigen Reihe von Planetenrädern (150) definiert, die um die Achse X angeordnet und mit dem Sonnenrad in Eingriff sind, wobei das Sonnenrad Mittel zur Kopplung an eine erste Welle aufweist, wobei der Käfig zwei ringförmige Wände (136, 138) aufweist, die im Wesentlichen parallel und auf der X-Achse zentriert sind, und eine zylindrische Wand (140), welche die ringförmigen Wände an ihrem Außenumfang verbindet, wobei eine erste (136) der ringförmigen Wände mit einem im Wesentlichen zylindrischen Körper (142) verbunden ist, der Mittel zur Kopplung an eine zweite Welle aufweist, und eine zweite (138) der ringförmigen Wände Durchgänge für die Montage der Düsen aufweist, indem jede Düse (172) in einer Richtung im Wesentlichen parallel zur X-Achse bewegt wird, **dadurch gekennzeichnet, dass** die Düsen (172) so ausgestaltet sind, dass sie zuvor vom Inneren des Käfigs aus an der zweiten Wand montiert werden.

8. Einheit nach dem vorstehenden Anspruch, wobei die Düsen (172) wie in Anspruch 6 definiert sind, wobei die Düsen jeweils einen ersten länglichen Abschnitt umfassen, der die Vorsprünge (176a) und die Lasche (175) aufweist, und einen zweiten Gewindeabschnitt, wobei der erste Abschnitt jeder Düse so ausgestaltet ist, dass er sich in das Innere des Käfigs (134) erstreckt, und der Gewindeabschnitt dazu bestimmt ist, eine Mutter (177a) aufzunehmen, die dazu bestimmt ist, auf einer Außenseite des Käfigs aufzuliegen.

9. Einheit nach Anspruch 8, wobei der Gewindeabschnitt jeder Düse (172) einerseits eine Aufnahme (160a) eines Laufrads (120), das an der zweiten Wand (138) des Käfigs angebracht und befestigt ist, und andererseits eine Aufnahme (160b) dieser zweiten Wand durchquert.

10. Flugzeugturbomaschine, **dadurch gekennzeichnet, dass** sie ein Untersetzungsgetriebe mit Planetengetriebe umfasst, das mindestens eine Düse (172) nach einem der Ansprüche 1 bis 6 oder eine Einheit nach einem der Ansprüche 7 bis 9 aufweist.

## Claims

1. Lubricant nozzle (172) for a planetary gear set speed reducer of a turbomachine, said nozzle having a generally elongated shape and comprising a body with a longitudinal axis B, said body comprising a longitudinal inner cavity (174) which is in fluid communication with a lubricant inlet located at a longitudinal end (172a) of said body and with lubricant outlet apertures (176) which are formed in an annular wall of said body and which extend substantially radially with respect to said longitudinal axis B, said apertures are formed in at least one boss (176a) of said body, which projects radially outwards on said wall, **characterised in that** said at least one boss (176a) is at an angular extent (β-Fig. 8) about said longitudinal axis B which is less than 180°.

2. Nozzle (172) according to the preceding claim, wherein the at least one boss (176a) has, in the transversal cross-section, a generally rectangular, triangular or trapezoidal shape.

3. Nozzle (172) according to the preceding claim, wherein the trapezoidal boss (176a) comprises a small base which is defined by the radially outer end of the boss (176a) on which said apertures (176) open, and edges which together form an angle (α) of between 0 and 90°.

4. Nozzle (172) according to one of the preceding claims, wherein said body comprises at least two bosses (176a) at a longitudinal distance from one another.

5. Nozzle (172) according to one of the preceding claims, wherein said body comprises at least one outer annular groove for housing a sealing ring.

6. Nozzle (172) according to one of the preceding claims, comprising a fixing leg (175) formed of one single part with the body, said leg extending substantially in a plane perpendicular to said axis and comprising an aperture for the passage of a fixing means of the screw-nut or screw-tapped hole type.

7. Assembly comprising a planet gear carrier (130) and nozzles (172) according to one of the preceding claims, for a planetary gear set speed reducer of a turbomachine, said planet gear carrier comprising a cage (134) defining an inner space for mounting a central sun gear (151) of axis X of rotation and an annular row of planet gears (150) arranged about the axis X and meshed with said sun gear, said sun gear comprising means for coupling to a first shaft, said cage comprising two substantially parallel annular walls (136, 138) centred on said axis X and a cylindrical wall (140) connecting said annular walls at their outer periphery, a first (136) of said annular walls being connected to a substantially cylindrical body (142) comprising means for coupling to a second shaft, and a second (138) of said annular walls comprising passages for the mounting of the nozzles, by moving each nozzle (172) in a direction substantially parallel to said axis X, **characterised in that** said nozzles (172) are configured to be mounted beforehand on said second wall from the inside of the cage.

8. Assembly according to the preceding claim, the nozzles (172) being such as defined in claim 6, wherein said nozzles each comprise a first longitudinal portion comprising said bosses (176a) and said leg (175) and a second threaded portion, the first portion of each nozzle being configured to extend inside said cage (134) and the threaded portion being intended to receive a nut (177a) intended to bear on an outer face of said cage.

9. Assembly according to claim 8, wherein the threaded portion of each nozzle (172) passes through, on the one hand, a housing (160a) of an impeller (120) returned and fixed on said second wall (138) of the cage, and on the other hand, a housing (160b) of this second wall.

10. Aircraft turbomachine, **characterised in that** it comprises a planetary gear set speed reducer comprising at least one nozzle (172) according to one of claims 1 to 6, or an assembly according to one of claims 7 to 9.
